# FASCICULE DE BREVET EUROPEEN

(11) **EP 0 474 519 B1**
(45) Date de publication et mention de la délivrance du brevet: **23.04.1997**
(21) Numéro de dépôt: 91401616.7
(22) Date de dépôt: 17.06.1991
(51) Int. Cl.: G06K 7/06, G06K 13/08, H01R 9/09

(54) **Connecteur pour cartes à mémoire électronique**
Steckverbinder für elektrische Speicherkarten
Connector for electric memory cards

(30) Priorité: 23.07.1990 FR 9009392
(43) Date de publication de la demande: 11.03.1992
(73) Titulaire: ITT COMPOSANTS ET INSTRUMENTS, F-92220 Bagneux (FR)
(72) Inventeur: Juret, Bernard, F-39100 Dole (FR); Janniere, Alain, F-75004 Paris (FR)
(74) Mandataire: Kohn, Philippe

(56) Documents cités:
- EP-A- 0 231 409
- EP-A- 0 348 929
- EP-A- 0 366 513
- EP-A- 0 376 087
- FR-A- 2 578 072
- JP-A-63 024 485

## Description

La présente invention concerne un connecteur électrique pour cartes à mémoire électronique du type comportant sur une de ses faces principales une pluralité de plages de contact électrique alignées parallèlement à la direction d'introduction de la carte dans un dispositif de lecture-écriture et un bord transversal antérieur perpendiculaire à la direction d'introduction, le connecteur comportant un boîtier qui délimite au moins partiellement une fente d'introduction de la carte, un commutateur de fin de course d'introduction de carte et des moyens de commande du commutateur avec lesquels coopère le bord transversal antérieur de la carte.

Un connecteur de ce type est par exemple décrit et représenté dans le document EP-A-0.231.409 dans lequel le commutateur est un micro-interrupteur qui présente l'avantage d'être étanche et donc d'assurer un déclenchement fiable dans la plupart des circonstances mais qui est particulièrement encombrant.

Un tel agencement d'un micro-interrupteur ne peut notamment pas être prévu dans les connecteurs d'une conception plus récente tel que celui décrit et représenté dans la demande de brevet français n° 88 13988 du 26 octobre 1988 dans laquelle le connecteur est pour l'essentiel constitué par un cadre support des contacts qui est prévu pour être intégré dans un dispositif de lecture-écriture dans lequel il est monté directement sur une carte de circuit imprimé.

Etant donné les impératifs d'encombrement et de raccordement de ce type de connecteur, il a été tenté de développer des commutateurs de fin de course constitués par deux lames métalliques qui coopèrent entre elles pour définir un contact ouvert ou fermé agencé dans le fond de la fente délimitée au moins partiellement par le cadre support des contacts et éventuellement son couvercle complémentaire.

Il a déjà été proposé dans le document JP-A-63024485 l'agencement d'un commutateur de fin de course dont la commande du déclenchement conserve les propriétés de précision et de fidélité que possèdent par exemple les commutateurs de fin de course à deux lames.

Dans ce but, ce document propose un connecteur du type décrit plus haut dans lequel les moyens de commande du commutateur de fin de course comportent un levier qui est articulé autour d'un axe parallèle au plan de la carte, dont un point d'appui coopère avec un organe de déclenchement du commutateur et dont le point d'application de la force motrice par la carte coopère avec le bord antérieur de la carte.

Toutefois, la conception proposée dans ce document ne permet pas de réaliser un connecteur de faible épaisseur.

Afin de remédier à cet inconvénient, l'invention propose un connecteur du type mentionné précédemment, caractérisé en ce que le levier de commande est réalisé sous la forme d'une lame déformable élastiquement, qui s'étend parallèlement auxdites faces principales, dont une extrémité constitue l'axe d'articulation du levier de commande, et en ce que les organes constitutifs dudit commutateur de fin de course, dont l'organe de déclenchement sont agencés dans l'épaisseur du connecteur.

Selon d'autres caractéristiques de l'invention :
- la lame formant levier de commande est réalisée venue de matière par moulage en matière plastique avec un cadre support des contacts électriques du connecteur;
- ladite extrémité constituant l'axe d'articulation du levier de commande est encastrée dans le matériau constitutif du boîtier;
- l'axe d'articulation du levier est perpendiculaire à la direction d'introduction de la carte;
- le point d'appui est agencé sensiblement entre l'axe d'articulation et le point d'application de la force motrice;
- le point d'application de la force motrice est constitué par une rampe en saillie formée au voisinage de l'extrémité libre de la lame et qui coopère avec le bord transversal antérieur de la carte;
- le commutateur de fin de course comporte un organe de déclenchement de forme générale bombée qui est déformable élastiquement pour établir une liaison électrique entre deux contacts électriques du commutateur de fin de course en réponse à un effort axial de déclenchement qui lui est appliqué par le point d'appui du levier;
- le commutateur de fin de course est agencé au moins partiellement dans un logement complémentaire du cadre support des contacts électriques qui s'ouvre dans la face inférieure du cadre opposée à la face supérieure qui reçoit la carte.

D'autres aspects et avantages de l'invention apparaîtront à la lecture de la description détaillée qui suit pour la compréhension de laquelle on se reportera aux dessins annexés dans lesquels :
- La figure 1 est une vue de dessus du cadre support de contacts électriques d'un premier mode de réalisation d'un connecteur électrique selon l'invention;
- la figure 2 est une vue en section selon la ligne 2-2 de la figure 1 ;
- la figure 3 est une vue en section selon la ligne 3-3 de la figure 1 ;
- les figures 4 et 5 sont des vues similaires à celles de la figure 2 de deux autres modes de réalisation de connecteurs électriques selon l'invention.

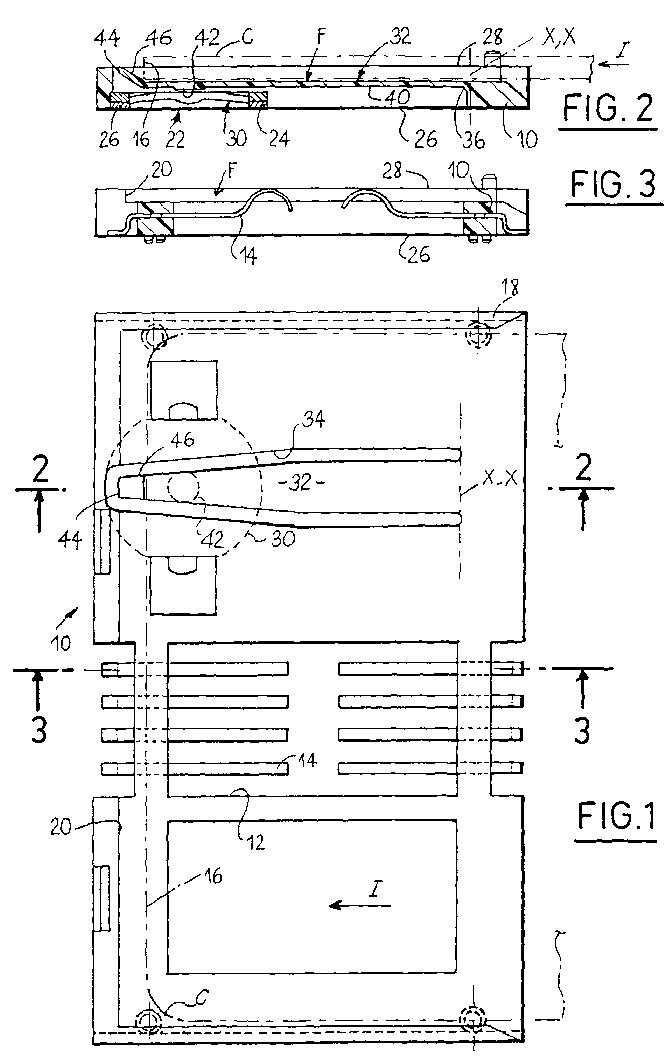

La conception générale du cadre support de contacts électriques d'un connecteur électrique pour cartes à mémoires électroniques du type de celui représenté aux figures 1 à 3, correspond à celle de celui décrit et représenté dans la demande de brevet français n° 88 13988 au contenu de laquelle on pourra se reporter pour une description détaillée de cette conception, de sa structure et de son procédé de réalisation.

Le cadre support 10 est de forme générale rectangulaire et comprend principalement au moins une ouverture rectangulaire 12 dans laquelle sont agencés des conducteurs électriques en forme de lames élastiques déformables 14 qui s'étendent parallèlement à la direction d'introduction I d'une carte à mémoire électronique C dont on a représenté la silhouette en traits mixtes aux figures 1 et 2, notamment la trace de son bord latéral antérieur avant 16.

La carte C est prévue pour coulisser dans une fente d'introduction F délimitée au moins partiellement dans le cadre support 10 par des glissières latérales de guidage 18.

La position maximale d'enfoncement de la carte C est définie par des surfaces de butée 20 formées au fond de la fente d'introduction de la carte.

Comme cela était exposé dans le préambule de la présente demande, il est nécessaire de prévoir des moyens de détection de la position enfoncée de la carte, dans un dispositif de lecture-écriture incorporant un connecteur électrique selon l'invention, avant que ce dispositif de lecture-écriture ne commence à traiter les informations contenues dans la carte.

Conformément à l'invention, le dispositif de détection comporte un commutateur électrique de détection de fin de course 22 qui est agencé au moins partiellement dans un logement 24 qui s'ouvre dans la face inférieure 26 du cadre support 10 opposée à sa face supérieure plane 28 dans laquelle est formée la fente F d'introduction de la carte C.

Dans le mode de réalisation représenté aux figures 1 et 2, le commutateur 22 est du type connu en soi appelé "disc-switch".

Comme on peut le voir aux figures 1 et 3, ce type de commutateur comporte des éléments formant boîtiers 26 qui comportent des broches de raccordement (non représentées) qui s'étendent perpendiculairement au plan général du cadre support 10 pour être reçues dans des trous correspondants d'une plaque de circuit imprimé prévue pour recevoir le cadre 10.

Le commutateur 22 comporte un organe conducteur de l'électricité 30 qui fait fonction d'organe de déclenchement du commutateur et qui est de forme générale bombée.

L'organe de déclenchement 30 est susceptible de se déformer élastiquement sous l'action d'une force de déclenchement qui agit sur celui-ci selon une direction axiale sensiblement centrée par rapport à l'organe bombé et perpendiculaire au plan général de ce dernier.

Conformément à l'invention, les moyens de commande de déclenchement du commutateur de fin de course 22 comportent un levier de commande 32.

Le levier 32 est réalisé sous la forme d'une lame élastique déformable venue de moulage avec le cadre support 10 qui est délimité dans une portion pleine du cadre par une fente périphérique 34. L'extrémité 36 du levier 32 est ainsi "encastrée" dans la matière plastique constitutive du cadre 10 et constitue un axe d'articulation X-X du levier de commande 32 par rapport au cadre support 10.

La lame plane s'étend parallèlement aux faces planes parallèles inférieure 26 et supérieure 28 du cadre 10 et son axe d'articulation X-X est parallèle au plan de la carte et perpendiculaire à la direction d'introduction I de cette dernière.

Le levier 32 est un levier dit du deuxième type et s'étend depuis son axe d'articulation X-X en direction du bord du cadre délimité par la surface de butée transversale 20.

La face inférieure 40 de la lame formant levier 32 comporte une surépaisseur en forme de plot plat ou hémisphérique 42 qui est agencée longitudinalement sur le levier pour en constituer le point d'appui qui agit sur l'organe de déclenchement 30 du commutateur de fin de course 22.

Le point d'appui 42 est situé entre l'axe d'articulation X-X et l'extrémité libre 44 de la lame formant levier 32.

Cette extrémité libre est conformée sur sa face supérieure 46 en forme de rampe inclinée qui s'étend dans la fente d'introduction F de manière à coopérer avec le bord transversal avant 16 de la carte C lorsque cette dernière est introduite dans la fente F.

La coopération du bord 16 avec la rampe en saillie formant came 46 provoque la rotation du levier 32 autour de l'axe X-X, dans le sens anti-horaire en considérant la figure 2, ce qui provoque la sollicitation axiale de l'organe de déclenchement 30 par le point d'appui hémisphérique 42.

La géométrie de l'extrémité 44 du levier 32 est telle que le changement d'état du commutateur s'effectue conformément aux normes de sécurité définies en matière d'utilisation des cartes à micro-circuit.

Comme on peut le constater à la figure 2, la totalité du levier 32 et des organes constitutifs du commutateur de fin de course 22 sont agencés dans l'épaisseur du cadre support 10 délimitée par ses faces planes opposées 26 et 28.

Le commutateur de fin de course 22 est protégé par le fond horizontal du cadre support 10 dans lequel est formée la fente 34 qui délimite le levier 32.

Il a ainsi été possible de réaliser un cadre support d'épaisseur réduite et permettant l'agencement d'un commutateur de fin de course.

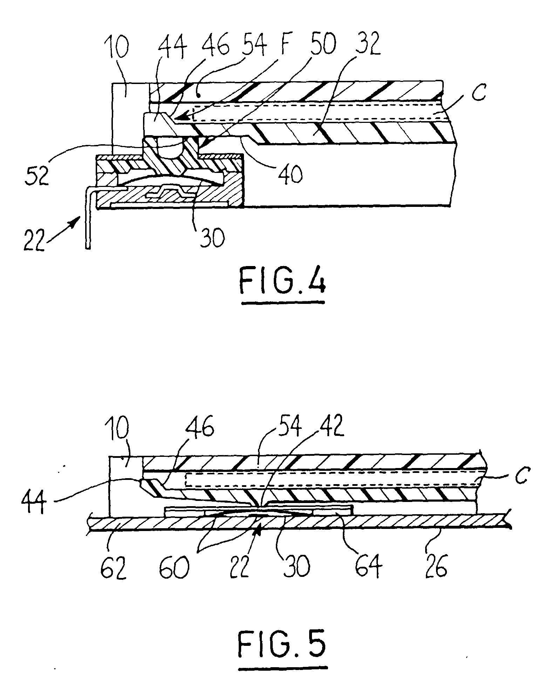

Dans le mode de réalisation schématisé à la figure 4, le connecteur diffère de celui qui vient d'être décrit de par la nature du commutateur de fin de course qui est ici un commutateur appelé "micro-switch" étanche.

L'organe de déclenchement bombé 30 est actionné par une tige formant poussoir 50 du type de celle décrite et représentée dans la demande de brevet français n° 90 06321 déposée le 21 mai 1990 et qui est susceptible de se déformer élastiquement selon sa direction axiale en réponse à l'effort axial qui est appliqué à son extrémité libre 52 par le levier 32, lorsque l'effort axial est supérieur à l'effort axial de déclenchement de l'organe 30, pour permettre à l'extrémité libre 52 d'effectuer une course supérieure à la course de déclenchement du commutateur.

Dans le mode de réalisation représenté à la figure 4, le point d'appui du levier 32 est constitué par sa face inférieure plane 40 au voisinage de son extrémité libre 44.

On a également représenté sur ces figures un couvercle 54 de fermeture du cadre 10 pour compléter la fente d'introduction F.

Il serait bien entendu possible de prévoir que le point d'appui du levier 32 sur le commutateur 22 soit situé dans une zone médiane entre l'extrémité libre 44 et l'axe d'articulation X-X.

Enfin dans le mode de réalisation représenté à la figure 5, le commutateur électrique 22 est constitué pour l'essentiel d'un dôme bombé 30 agencé dans un logement de la face inférieure 26 du cadre 10 et qui coopère directement avec des contacts électriques 60 formés sur la carte à circuit imprimé 62 qui reçoit le cadre support 10.

L'ensemble est protégé par un film mince 64 qui ferme la partie supérieure du logement qui reçoit le dôme de déclenchement 30. On conçoit que ce mode de réalisation conduit à un encombrement extrêmement réduit en épaisseur.

## Revendications

1. Connecteur électrique pour cartes (C) à mémoire électronique du type comportant sur une de ses faces principales une pluralité de plages de contact électrique alignées parallèlement à la direction (I) d'introduction de la carte dans un dispositif de lecture-écriture et un bord transversal antérieur (16) perpendiculaire à la direction d'introduction (I), le connecteur comportant un boîtier qui délimite au moins partiellement une fente (F) d'introduction de la carte, un commutateur (22) de fin de course d'introduction de la carte et un levier (32) de commande du commutateur avec lequel coopère le bord transversal antérieur de la carte, qui est articulé autour d'un axe (X-X) parallèle au plan de la carte, dont un point d'appui (42) coopère avec un organe de déclenchement (30) du commutateur et dont le point (46) d'application de la force motrice par la carte coopère avec le bord antérieur (16) de la carte, caractérisé en ce que le levier de commande est réalisé sous la forme d'une lame déformable élastiquement (32) , qui s'étend parallèlement auxdites faces principales, dont une extrémité (36) constitue l'axe d'articulation (X-x) du levier de commande, et en ce que les organes constitutifs dudit commutateur de fin de course, dont l'organe de déclenchement (30), sont agencés dans l'épaisseur du connecteur.

2. Connecteur selon la revendication 1, caractérisé en ce que la lame (32) formant levier de commande est réalisée venue de matière par moulage en matière plastique avec un cadre (10) support des contacts électriques du connecteur.

3. Connecteur selon la revendication 1, caractérisé en ce que ladite extrémité (36) constituant l'axe d'articulation du levier de commande (32) est encastrée dans le matériau constitutif du boîtier.

4. Connecteur selon l'une quelconque des revendications 1 à 3, caractérisé en ce que l'axe (X-X) d'articulation du levier (32) est perpendiculaire à la direction (I) d'introduction de la carte.

5. Connecteur selon l'une quelconque des revendications 1 à 4, caractérisé en ce que le point d'appui (42) est agencé sensiblement entre l'axe d'articulation (X-X) et le point d'application (46) de la force motrice.

6. Connecteur selon la revendication 5, caractérisé en ce que le point d'application de la force motrice est constitué par une rampe en saillie (46) formée au voisinage de l'extrémité libre (44) de la lame (32) et qui coopère avec le bord transversal antérieur (16) de la carte.

7. Connecteur selon l'une des revendications précédentes, caractérisé en ce que le commutateur de fin de course (22) comporte un organe de déclenchement de forme générale bombée (30) qui est déformable élastiquement pour établir une liaison électrique entre deux contacts électriques du commutateur de fin de course (22) en réponse à un effort axial de déclenchement qui lui est appliqué par le point d'appui (42) du levier.

8. Connecteur selon l'une quelconque des revendications précédentes, caractérisé en ce que le commutateur de fin de course (22) est agencé au moins partiellement dans un logement complémentaire (24) du cadre support des contacts électriques qui s'ouvre dans la face inférieure (26) du cadre opposée à la face supérieure (28) qui reçoit la carte (C).

## Patentansprüche

1. Elektrischer Steckverbinder für elektronische Speicherkarten (C) mit einer Vielzahl elektrischer Kontaktstellen an einer seiner Hauptseiten, welche parallel zur Einführrichtung (I) der Karte in eine Lese-Schreibvorrichtung ausgerichtet sind, und mit einem quergerichteten, senkrecht zur Einführrichtung (I) verlaufenden vorderen Rand (16), wobei der Verbinder ein Gehäuse aufweist, das zumindest teilweise einen Einführschlitz (F) für die Karte bildet, sowie einen Endschalter (22) für die eingeführte Karte und einen Hebel (32) zum Betätigen des Schalters, mit welchem der quergerichtete vordere Rand der Karte zusammenwirkt, wobei der Hebel (32) um eine Achse (X-X) parallel zur Ebene der Karte ausschwenkbar ist, von welchem ein Auflagepunkt (42) mit einem Organ zum Auslösen (30) des Schalters zusammenwirkt und von dem der Angriffspunkt (46) für die von der Karte ausgeübte Schwenkkraft mit dem vorderen Rand (16) der Karte zusammenwirkt, dadurch gekennzeichnet, daß der Betätigungshebel die Dorm einer elastisch verformbaren Zunge (32) hat, die sich parallel zu den erwähnten Hauptseiten erstreckt, von der ein Ende (36) die Schwenkachse (X-X) des Betätigungshebels bildet, und daß die Grundbestandteile des Endschalters, darunter das Auslöseorgan (30), aufgrund der Höhe des Verbinders in diesem angeordnet sind.

2. Verbinder nach Anspruch 1, dadurch gekennzeichnet, daß die den Betätigungshebel bildende Zunge (32) durch Formguß in einem Stück mit einem Stützrahmen (10) für die elektrischen Kontakte des Verbinders aus Kunststoff hergestellt ist.

3. Verbinder nach Anspruch 1, dadurch gekennzeichnet, daß das die Schwenkachse des Betätigungshebels (32) bildende Ende (36) in das das Gehäuse bildende Material eingefügt ist.

4. Verbinder nach einem der Ansprüche 1 bis 3, dadurch gekennzeichnet, daß die Schwenkachse (X-X) des Hebels (32) senkrecht zur Einführrichtung (I) der Karte verläuft.

5. Verbinder nach einem der Ansprüche 1 bis 4, dadurch gekennzeichnet, daß der Auflagepunkt (42) annähernd zwischen der Schwenkachse (X-X) und dem Angriffspunkt (46) der Schwenkkraft angeordnet ist.

6. Verbinder nach Anspruch 5, dadurch gekennzeichnet, daß der Angriffspunkt der Schwenkkraft von einer in der Nähe des freien Endes (44) der Zunge (32) schräg abstehend ausgebildeten Fläche (46) gebildet ist, die mit dem quergerichteten vorderen Rand (16) der Karte zusammenwirkt.

7. Verbinder nach einem der vorhergehenden Ansprüche, dadurch gekennzeichnet, daß der Endschalter (22) ein Auslöseorgan (30) mit einer im großen und ganzen balligen Form aufweist, das elastisch verformbar ist, um eine elektrische Verbindung zwischen zwei elektrischen Kontakten des Endschalters (22) herzuztellen als Reaktion auf eine durch den Auflagepunkt (42) des Hebels auf dieses Organ ausgeübte axiale Auslösekraft.

8. Verbinder nach einem der vorhergehenden Ansprüche, dadurch gekennzeichnet, daß der Endschalter (22) wenigstens teilweise in einer komplementär ausgebildeten Aufnahme (24) des Stützrahmens für die elektrischen Kontakte angeordnet ist, die auf der Unterseite (26) des Rahmens, der Oberseite (28), die die Karte (C) aufnimmt, gegenüberliegend, offen ist.

## Claims

1. Electrical connector for electronic memory cards (C) of the type comprising on one of its principal faces a plurality of electrical-contact regions aligned parallel to the direction (I) of insertion of the card into a read-write device and a front transverse edge (16) perpendicular to the direction of insertion (I), the connector comprising a casing which delimits at least partially a slot (F) for insertion of the card, an end-of-stroke commutator (22) for insertion of the card and a lever (32) for controlling the commutator, with which the front transverse edge of the card cooperates, which is articulated about an axis (X-X) parallel to the plane of the card, a support point (42) of which cooperates with a triggering element (30) of the commutator and the point (46) of which for application of the motive force by the card cooperates with the front edge (16) of the card, characterised in that the control lever is constructed in the form of an elastically deformable blade (32) which extends parallel to said principal faces, one end (36) of which constitutes the axis of articulation (X-X) of the control lever, and in that the constituent elements of said end-of-stroke commutator, one of which is the triggering element (30), are arranged within the thickness of the connector.

2. Connector according to Claim 1, characterised in that the blade (32) forming the control lever is produced from material by moulding plastic material with a support frame (10) for the electrical contacts of the connector.

3. Connector according to Claim 1, characterised in that said end (36) constituting the axis of articulation of the control lever (32) is embedded in the material constituting the casing.

4. Connector according to any one of Claims 1 to 3, characterised in that the axis (X-X) of articulation of the lever (32) is perpendicular to the direction (I) of insertion of the card.

5. Connector according to any one of Claims 1 to 4, characterised in that the support point (42) is arranged substantially between the axis of articulation (X-X) and the point of application (46) of the motive force.

6. Connector according to Claim 5, characterised in that the point of application of the motive force is constituted by a projecting ramp (46) formed in the vicinity of the free end (44) of the blade (32) and which cooperates with the front transverse edge (16) of the card.

7. Connector according to one of the preceding claims, characterised in that the end-of-stroke commutator (22) comprises a triggering element of generally cambered shape (30) which is elastically deformable with a view to establishing an electrical connection between two electrical contacts of the end-of-stroke commutator (22) in response to an axial triggering force which is applied to it by the support point (42) of the lever.

8. Connector according to any one of the preceding claims, characterised in that the end-of-stroke commutator (22) is arranged at least partially in a complementary housing (24) of the support frame for the electrical contacts which opens into the lower face (26) of the frame opposite the upper face (28) that receives the card (C).
